# EUROPEAN PATENT APPLICATION

(11) **EP 4 821 730 A1**
(43) Date of publication of application: **14.10.2026**
(21) Application number: 25169623.3
(22) Date of filing: 10.04.2025
(51) Int. Cl.: B60K 15/05

(54) **FLAP MECHANISM**

(71) Applicant: Aptiv Technologies AG, 8200 Schaffhausen (CH)
(72) Inventor: ANDRZEJEWSKI, Jacek, 32-050 Skawina (PL); JANCZYK, Rafal, 30-703 Kraków (PL); SZOSTEK, Grzegorz, 32-084 Morawica (PL)
(74) Representative: INNOV-GROUP

(57) **Abstract**

The invention is directed to a mechanism (1) comprising a fixed body (2), an actuator (3), a wheel (4) and a flap (5), a first driving means through which the actuator (3) reciprocally rotationally drives the wheel (4), a second driving means through which the wheel (4) consequently reciprocally drives the flap (5), between at least a closed position (51) and an open position (52) and a bypass forcefully releasable to disconnect the second driving means so as to allow a movement of the flap (5) with respect to the wheel (4), between any of the positions (51, 52).

The invention is also directed to an electric car charging connector (8) comprising such a mechanism to protect, at least some of its terminals (81, 82).

## Description

### Technical domain

The invention concerns a flap mechanism for closing and opening a flap.

### Background

It is known to use a flap able to selectively and reciprocally move between a closed position and an open position. In closed position, the flap covers a device, such as a fuel hatch or an electric connector, to protect it from dust and from fraudulent or erroneous use. In open position, the flap allows access to the device.

It is also known to use an actuator and a transmission to motorize the movement of the flap. For several reasons, the actuator and/or the transmission is often a non-reversible one, including e.g. a worm screw and gear. Thus, the actuator can reciprocally move the flap, but the flap is blocked in position when the actuator is not operational, for example when its power is off.

The invention aims to provide an emergency mode, where the flap can be manually moved, even when the actuator is stuck.

### Summary of the invention

To do so, the invention is directed to a mechanism comprising a fixed body, an actuator, a wheel and a flap, a first driving means through which the actuator reciprocally rotationally drives the wheel, a second driving means through which the wheel consequently reciprocally drives the flap, between at least a closed position and an open position, and a bypass forcefully releasable to disconnect the second driving means so as to allow a movement of the flap with respect to the wheel, between any of the positions, without rotating the wheel.

Some specific features or embodiments, usable alone or in combination, are:
- the wheel is rotationally fixed to the fixed body around an axis, the flap is rotationally fixed to the fixed body, around the same axis, the second driving means comprises a maneuvering pin, part of the flap, generally parallel to axis, cooperating with at least one recess, part of the wheel, able to firmly welcome the maneuvering pin so as to reciprocally transmit the rotation of the wheel to the maneuvering pin and thus reciprocally move the flap when the wheel rotates,
- the bypass comprises a path between any two adjacent recesses, part of the wheel, wherein said path remains blocked to forbid a movement of the maneuvering pin with respect to the wheel, when a relative force between the flap and the wheel remains lesser than a threshold and being forcefully and reversibly deformed, so as to be loosened and to allow a movement of the maneuvering pin with respect to the wheel, from one recess to an adjacent other, when the relative force is greater than the threshold, without rotating the wheel,
- recesses are circularly located around axis, paths are circularly shaped around axis, from one recess to an adjacent one, and together form a circular cam centered around axis,
- the circular cam is located on the outer periphery of the wheel and is single sided,
- the circular cam is not located on the outer periphery of the wheel and is double sided,
- the forceful reversible deformation of a path is mainly obtained from matter, preferentially polyurethan,
- the forceful reversible deformation of a path is mainly obtained from shape, the wheel further comprising at least one elongated hole, generally internally following a path, to allow its deformation and wherein the wheel is preferentially made of plastic,
- the second driving means comprises a rotational coupling comprising a non-circular shaped shaft, part of flap, respectively of the wheel, and a correspondingly non-circular shaped bore, part of the wheel, respectively of the flap, wherein at least one among the shaft and/or the bore is forcefully deformable so as to provide a bypass, allowing the shaft and the bore to rotate with respect to one another,
- the common non-circular shape is rotationally symmetrical, preferentially regularly toothed, so as to reproduce itself when rotating and thus indexing the rotation, the distance between two indexes defining the distance between any two positions,
- the actuator is translating, disposed generally perpendicular to axis and not passing through axis, having an end fixed to the fixed body, wherein the first driving means comprises a generally radial slot, with respect to axis, cut in the wheel, able to receive the other end of the actuator and to cooperate with it to reciprocally rotationally drive the wheel when the actuator is reciprocally operated,
- the actuator is rotating,
- the mechanism is designed to apply a light pressure on the flap when in closed position, in order to avoid rattling of the flap.

The invention is further directed to a connector comprises such a mechanism, the flap being used, to selectively protect, at least some of the terminals of said connector,

Some specific features or embodiments, usable alone or in combination, are:
- said connector, is used to charge an electric car, disposed on the car side, comprising DC terminals and AC terminals, wherein the flap selectively protects the DC terminals.

### Drawings

Other features, details and advantages of the invention will become more apparent from the detailed illustrating description given hereafter with respect to the drawings on which:
[Fig. 1] shows, in lateral view, a mechanism with a first embodiment of the bypass,
[Fig. 2] shows, in perspective view, a mechanism with the flap, the wheel and the actuator in closed position,
[Fig. 3] shows, in perspective view, a mechanism with the flap, the wheel and the actuator in open position,
[Fig. 4] shows, in lateral view, a mechanism with the flap in close position, the wheel and the actuator in open position,
[Fig. 5] shows, in perspective view, a mechanism with the flap in open position, the wheel and the actuator in close position,
[Fig. 6] shows, in perspective view, a mechanism with a second embodiment of the bypass,
[Fig. 7] shows, in perspective view, a detail of the mechanism of figure 6,
[Fig. 8] shows, in perspective view, another detail of the mechanism of figure 6,
[Fig. 9] shows, in schematic view, a possible application of the mechanism,
[Fig. 10] shows, in perspective view, an embodiment of the wheel,
[Fig. 11] shows, in perspective view, another embodiment of the wheel,
[Fig. 12] shows, in perspective view, another embodiment of the wheel.

### Detailed description

One object of the invention is a mechanism 1, comprising a flap 5 and able to move it between at least a closed position 51 and an open position 52.

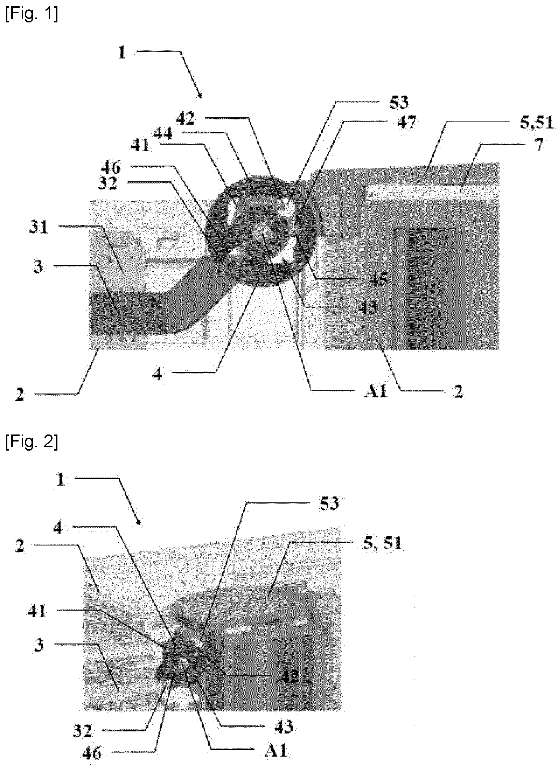

To do so, as illustrated in figure 1, said mechanism 1 comprises a fixed body 2, an actuator 3, a wheel 4 and a flap 5, a first driving means and a second driving means. The fixed body 2 provides fixed reference to the moving parts. The actuator 3, typically electric, provides movement of the parts to move the flap 5. The wheel 4 is a transmission part, transmitting movement. The flap 5 can be moved between at least a closed position 51 and an open position 52. Here, at least means the flap 5 can take at least two positions: a closed position 51 and an open position 52, but could also take a third position or more.

The first driving means is located between the actuator 3 and the wheel 4 and allows the actuator 3 to reciprocally rotationally drive the wheel 4. Here, rotationally means the wheel 4 rotates when driven. Here, reciprocally means between any two adjacent positions 51, 52, among the closed position 51, the open position 52 and any other possible position.

The second driving means is located between the wheel 4 and the flap 5 and allows the wheel 4 to consequently reciprocally drives the flap 5. Here, consequently means the wheel 4 drives the flap 5, through the second driving means, when the wheel 4 is itself driven by the actuator 3, through the first driving means.

Since the flap 5 can take at least two positions 51, 52, both the wheel 4 and the actuator 3 can take the same number of corresponding positions.

The wheel 4 is rotationally fixed to the fixed body 2 around an axis A. This can be done, as illustrated, thanks to a central bore 412 cut in the wheel 4, rotating around a shaft fixed to the fixed body 2. This could alternately be done through a shaft, part of the wheel 4, cooperating with a bore, drilled in the fixed body 2. The flap 5 is also rotationally fixed to the fixed body 2. Said rotation is around the same axis A.

This can be done, thanks to a central bore cut in the flap 5, rotating around a shaft fixed to the fixed body 2, as illustrated. This could alternately be done through a shaft, part of the flap 5, cooperating with a bore, drilled in the fixed body 2.

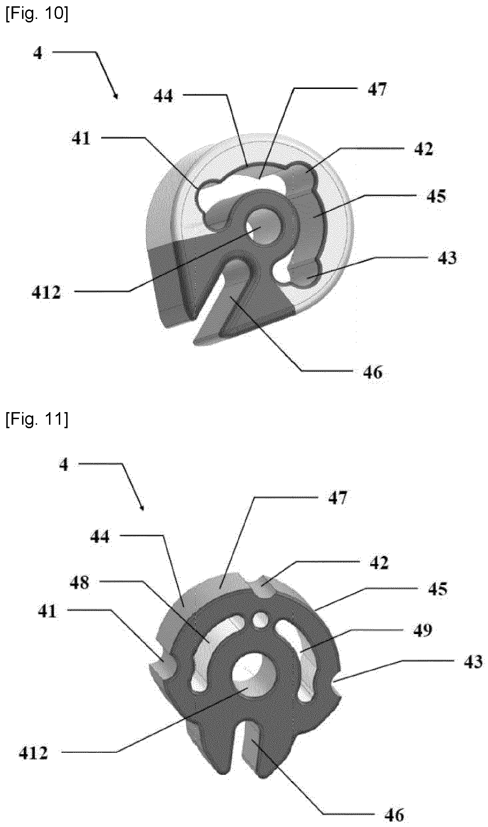

The wheel 4 is generally disc shaped, as can be seen on the different embodiments illustrated in figures 10-12.

According to a feature, the mechanism 1 further comprises a bypass. Said bypass is forcefully releasable. When it is released, the second driving means is disconnected. Said disconnection allows a relative movement between the flap 5 and the wheel 4, between any two adjacent positions, among said at least two positions 51, 52. Said relative movement allows to move the flap 5 without rotating the wheel 4. This may occur when the actuator 3 is non-operative and thus blocks the wheel 4, but the flap 5 still needs to be opened or closed. The bypass thus allows an emergency movement of the flap 5, preferentially manually operated, without rotating the wheel 4 and/or moving the actuator 3. Alternately, said relative movement allows to rotate the wheel 4 without moving the flap 5.

Here, will be described two illustrative embodiments of the bypass.

According to a first embodiment of the bypass, particularly illustrated in figures 1-5, the second driving means comprises a maneuvering pin 53, part of the flap 5. Said maneuvering pin 53 is generally parallel to the axis A. It cooperates with at least one recess 41, 42, 43, part of the wheel 4. Said recess 41, 42, 43 is able to welcome the maneuvering pin 53 and to firmly maintain it, at least in rotation around axis A. This allows to reciprocally transmit the rotation of the wheel 4 to the maneuvering pin 53. Accordingly, when the wheel 4 reciprocally rotates, the maneuvering pin 53 consequently reciprocally rotates around axis A. This consequently reciprocally moves the flap 5.

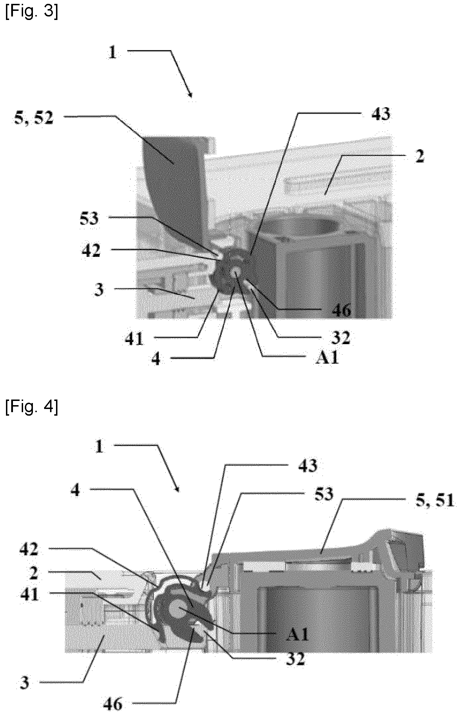

This allows a nominal operating mode of the mechanism 1, more particularly illustrated in figures 2 and 3. In figure 2, the flap 5 is in its closed position 51. The actuator 3 is in a corresponding retracted position, with it rod to the left of the figure. The wheel 4, as always, is aligned to the actuator 3, that is rotated to the right. Through said orientation of the wheel 4, the maneuvering pin 53 is welcomed in the middle recess 42. First/left recess 41 and third/right recess 43 are free.

In figure 3, the flap 5 is in its open position 52. To nominally go from the closed position 51 to the open position 52, the mechanism 1 operates the actuator 3. By doing this, the actuator 3 goes from the retracted position, as illustrated in figure 2 to an extended position, as illustrated in figure 3. Said operation, as will be detailed further, through the first driving means, rotates the wheel 4 counterclockwise, to reach the orientation of figure 3, rotated to the left. This, through the coupling provided by the maneuvering pin 53 maintained in the middle recess 42, applies a torque to the maneuvering pin 53 with respect to the axis A of the flap 5. This torque rotates the flap 5, also counterclockwise, opening the flap 5 so as to reproduce the configuration of figure 3.

To nominally go from the open position 52 to the closed position 51, the mechanism 1 operates the actuator 3 reversely. By doing this, the actuator 3 goes from the extended position, as illustrated in figure 3, to the retracted position, as illustrated in figure 2. Said operation rotates the wheel 4 clockwise, to reach the orientation of figure 2. This, through the coupling provided by the maneuvering pin 53 maintained in the middle recess 42, applies a torque to the maneuvering pin 53 with respect to axis A of the flap 5. This torque rotates the flap 5, also clockwise, closing the flap 5 so as to reproduce the configuration of figure 2.

In nominal operations, the maneuvering pin 53 always remains in the middle recess 42.

According to said first embodiment of the bypass, the bypass comprises a path 44, 45 between any two adjacent recesses 41, 42, 43. Said path 44, 45 is part of the wheel 4.

In the illustrated embodiment, since flap 5 can take two positions 51, 52, wheel 4 comprises three recesses 41, 42, 43. A first path 44 is between the left recess 41 and the middle recess 42 and a second path 45 is between the middle recess 4 and the right recess 43. A recess 41, 42, 43 is deeper than a path 44, 45, in that the bottom of a recess 41, 42, 43 is closer to the axis A, than a path 44, 45.

Said path 44, 45 can act in two modes: a blocked mode and a bypass mode. In blocked mode, a path 44, 45 remains blocked and forbids a movement of the maneuvering pin 53 with respect to the wheel 4. Said blocked mode applies when a relative force between the flap 5 and the wheel 4 remains lesser than a threshold. In blocked mode, the maneuvering pin 53 stays in the same recess 41, 42, 43 and said recess 41, 42, 43 is able to reciprocally drive it in rotation. This corresponds to the nominal mode of the mechanism 1.

If a path 44, 45 is not deformed, its greater distance to the axis A than the distance of a recess 41, 42, 43, blocks a rotation of the maneuvering pin 53 around axis A and maintains it in the recess 41, 42, 43.

In bypass mode, a path 44, 45 is forcefully and reversibly deformed, so as to be loosened and allows a relative movement between the maneuvering pin 53 and the wheel 4. When a path 44, 45 is deformed, the distance between the path 44, 45 and the axis A becomes generally equal to the distance between a recess 41, 42, 43 and axis A, at least under the maneuvering pin 53 which deforms the path 44, 45. The bypass mode applies when the relative force between the flap 5 and the wheel 4 becomes greater than the threshold so as to allow a deformation of the path 44, 45. Here, forcefully means the relative force between the flap 5 and the wheel 4 must be greater than the threshold to loosen and deform a path 44, 45. Here, reversibly means, the deformation spontaneously reverts back to normal when a path 44, 45 is no longer deformed by the maneuvering pin 53.

In bypass mode, the deformation of a path 44, 45, allows the maneuvering pin 53 to move from one recess 41, 42, 43 to an adjacent other. This allows a movement of the flap 5 between any of its at least two positions 51, 52, while the wheel 4 remains still and does not rotate.

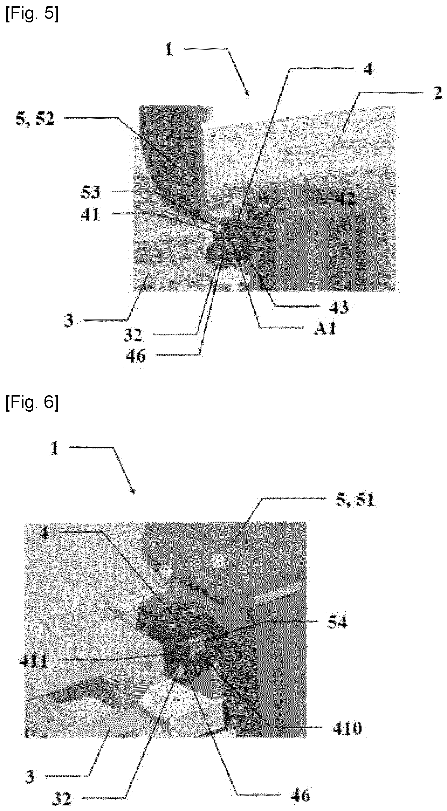

Figure 4 and 5 illustrate two possible uses of the bypass. Figure 4 shows the result of a bypass used to close the flap 5, in emergency, from the nominal open configuration of figure 3. In figure 3, the flap 5 is in the open position 52 and the maneuvering pin 53 is in the middle recess 42. It is supposed the actuator 3 cannot, e.g. due to a lack of power, or is not wanted to, be operated. Thus, the wheel 4 cannot be rotated and provides resistance to such a rotation. Then, a force applied, typically manually, to the flap 5 so as to here, close it, creates a force, between the flap 5 and the wheel 4, which easily tops the threshold. This will "open" the path, here the path 45, allowing the maneuvering pin 53 to move from the middle recess 42 to the right recess 43. So, the mechanism 1 moves from the configuration of figure 3, where the flap 5 is in the open position 52, the actuator 3 is extended, and the wheel 4 is in its open position, to the configuration of figure 4, where the flap 5 is in the closed position 51, without moving neither the actuator 3 nor the wheel 5.

Figure 5 shows the result of a bypass used to open the flap 5, in emergency, from the nominal closed configuration of figure 2. In figure 2, the flap 5 is in the closed position 51 and the maneuvering pin 53 is in the middle recess 42. It is supposed the actuator 3 cannot, e.g. due to a lack of power, or is not wanted to, be operated. Thus, the wheel 4 cannot be rotated and provides resistance to such a rotation. Then, a force applied, typically manually, to the flap 5 so as to here, open it, creates a force, between the flap 5 and the wheel 4, which easily tops the threshold. This will "open" the path, here the path 44, allowing the maneuvering pin 53 to move from the middle recess 42 to the left recess 41. So, the mechanism 1 moves from the configuration of figure 2, where the flap 5 is in the closed position 51, the actuator 3 is retracted, and the wheel 4 is in its closed position, to the configuration of figure 5, where the flap 5 is in the open position 52, without moving neither the actuator 3 nor the wheel 5.

According to another feature, recesses 41, 42, 43 are circularly located on the wheel 4, around axis A. Accordingly, paths 44, 45 are circularly shaped around axis A, from one recess 41, 42, 43 to an adjacent one. Recesses 41, 42, 43 and paths 44, 45, together form a circular cam 47. Said circular cam 47 is centered around axis A.

Several embodiments of the wheel 4 can be used in this first embodiment of the bypass, as illustrated in figures 10-12.

According to another feature, as illustrated in figures 2-5, 11, 12, the circular cam 47 is located on the outer periphery of the wheel 4. Consequently, the circular cam 47 is single sided. Said feature allows the maneuvering pin 53 to roll over the circular cam 47, easing the bypass.

According to another feature, as illustrated in figures 1, 10, the circular cam 47 is located inside the wheel 4, away from the periphery. Consequently, the circular cam 47 is double sided. This renders the wheel 4 more resistant, but the opening of path 44, 45, allowing the bypass, can become harder, since both sides of path 44, 45 must be deformed.

According to another feature, the forceful reversible deformation of a path 44, 45, to provide the bypass, is mainly obtained from matter. In this case, the matter itself is deformable, preferentially elastically. This concerns elastic matters such as elastomer or preferentially polyurethan. An illustration of this feature is given by the wheel of figure 10.

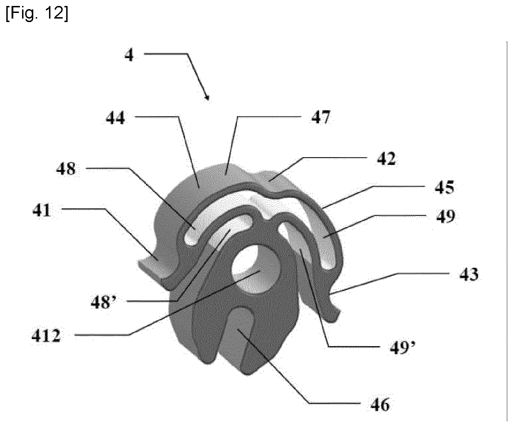

According to another feature, the forceful reversible deformation of a path 44, 45, to provide the bypass, is mainly obtained from shape. In this case, the wheel 4 can be made from a matter which is not very deformable per se, such as plastic. However, the deformation is provided by the shape of the wheel 4, whose path's walls are thinned so as to become deformable. The wheel 4 then further comprises at least one elongated hole 48, 48', 49, 49'. Said elongated hole 48, 48', 49, 49' is generally internally following a path 44, 45 to allow its deformation. This is illustrated by figures 11, 12. In figure 11, 12, the wheel 4 comprises a first series of elongated holes 48, 49. These elongated holes 48, 49 are closed. In figure 11, the wheel 4 further comprises a second series of elongated holes 48', 49'. These elongated holes 48', 49' double the first ones and are open to provide greater deformability.

According to a second embodiment of the bypass, particularly illustrated in figures 6-8, the second driving means comprises a rotational coupling between the wheel 4 and the flap 5. Said rotational coupling comprises a non-circular shaped shaft 54, part of flap 5 as illustrated, or respectively part of the wheel 4, and a correspondingly non-circular shaped bore 410, part of the wheel 4 as illustrated, or respectively part of the flap 5. Here, correspondingly means the outer profile of the shaft 54 generally reproduces/is inscribed in the inner profile of the bore 410, so that the shaft 54 can be inserted in the bore 410 and reciprocally rotationally drive it.

The non-circular shape ensures the rotational coupling and thus provides the second driving means, allowing the wheel 4 to reciprocally rotationally drive the flap 5.

According to another feature, the bypass is provided by at least one among the shaft 54 and/or the bore 410 being forcefully deformable. Said deformability allows the shaft 54 and the bore 410 to rotate with respect to one another, upon a torque greater than a threshold. Here, the threshold is given by deformability.

According to another feature, the common non-circular shape is rotationally symmetrical. Here, rotationally symmetrical means the shape reproduces itself when rotating. The symmetry order, that is the number of different relative rotational configurations of the wheel 4 with respect to the flap 5, is greater than or equal to the number of possible configurations (corresponding to the number of recesses 41, 42, 43 or to the number of positions 51, 52 plus 1 of the first embodiment of the bypass).

The common non-circular shape is preferentially regularly toothed, so as to reproduce itself when rotating. Each tooth then provides an indexed rotational position. The angular distance between two indexed positions defines the distance between any two positions 51, 52. As illustrated in figures 6-8, the shape is a four branches regular star or a cross, thus providing four possibles relative orientations of the flap 5 with respect to the wheel 4 (to be compared to the three recesses 41, 42, 43 of the first embodiment of the bypass).

Accordingly, as in the first embodiment of the bypass, the rotational deformable coupling allows the wheel 4 to rotationally reciprocally drive the flap 5 when the relative resisting torque is lesser than the deformability of the shaft 54 and/or the bore 410. This provides nominal mode, when the actuator 3 reciprocally drives the flap 5. On the contrary, when the relative torque becomes greater than the deformability, due e.g. to a non-operative actuator 3, a forceful maneuver of the flap 5, typically manually applied, can deform the shaft 54 and/or the bore 410 until it jumps a tooth and thus provides the bypass, allowing the flap 5 to move from one position 51, 52 to the other, without rotating the wheel 4.

As for the first embodiment of the bypass, deformability can be obtained either through matter or through shape. Wheel 4 comprises holes 411 intended to ease its deformation (to be compared to the elongated holes 48, 48', 49, 49' in the first embodiment).

In both embodiments of the bypass, if the flap 5 can takes x positions 51, 52, the second driving means comprises x+1 positions. A position is a recess 41, 42, 43 in the first embodiment of the bypass and an index/tooth in the second embodiment of the bypass. For example, in the illustrated first embodiment of the bypass, the two positions 51, 52 of the flap 5 leads to three recesses 41, 42, 43.

In nominal mode, mechanism 1 only uses the central middle recess 42 to welcome the maneuvering pin 53. In nominal mode, when the actuator 3 operates and changes position of the flap 5, the maneuvering pin 53 stays in the middle recess 42. Depending on the position 51 or 52 of the flap 5 when the actuator 3 blocks, the bypass allows the maneuvering pin 53 to move to either the left recess 41 or to the right recess 43. If the flap 5 is blocked in close position 51, the bypass, to move it to the open position 52, moves the maneuvering pin 53 to the left recess 41. Then, if the manual/emergency mode is further used, the flap 5 reciprocally moves from the open position 52, with the maneuvering pin 53 in the first recess 41, to the close position 51, with the maneuvering pin 53 in the middle recess 42.

On the contrary, If the flap 5 is blocked in open position 52, the bypass, to move it to the close position 51, moves the maneuvering pin 53 to the third recess 43. Then, if the manual/emergency mode is further used, the flap 5 reciprocally moves from the open position 52, with the maneuvering pin 53 in the middle recess 42, to the close position 51, with the maneuvering pin 53 in the third recess 43.

When nominal mode restores, if the maneuvering pin 53 is in the middle recess 42, all is reverted back to normal. The nominal mode can operate nominaly.

When nominal mode restores, if the maneuvering pin 53 is in an extremal recess 41, 43, the mechanism 1 cannot operate at least one of the two positions 51, 52 of the flap 5. This corresponds to the two configurations of figures 4, 5.

In figure 4, the maneuvering pin 53 is in the third recess 43, the actuator 3 is extended and the flap 5 is in the close position 51. To revert back to a fully nominal mode, the maneuvering pin 53 must first return to the middle recess 42. This can advantageously be done by operating the actuator 3. Said actuator 3 is currently in extended position, normally corresponding to an open position 52 of the flap 5. Then, operating the operator 3 retracts it and tends to close the flap 5, despites it is already in the close position 51. Thus, the flap 5 resists against an end of course stop and a force greater than the threshold is developed. This produces a bypass, allowing the wheel 4 to rotate with respect to the flap 5, staying in its same position. Said bypass leads the maneuvering pin 53 to move from the third recess 43 to the middle recess 42. Then, the actuator 3 is retracted, the wheel 4 is rotated to the right, and the flap 5 is in the close position 51. This corresponds to the nominal configuration of figure 2. The nominal mode is fully restored. The next operation of the actuator 3, to extend it, turns the wheel 4 to the left and moves the flap 5 to the open position 52.

In figure 5, the maneuvering pin 53 is in the first recess 41, the actuator 3 is retracted and the flap 5 is in the open position 52. To revert back to a fully nominal mode, the maneuvering pin 53 must first return to the middle recess 42. This can advantageously be done by operating the actuator 3. Said actuator 3 is currently in retracted position, normally corresponding to a close position 51 of the flap 5. Then, operating the operator 3 extends it and tends to open the flap 5, despites it is already in the open position 52. Thus, the flap 5 resists against an end of course stop and a force greater than the threshold is developed, with respect to the wheel 4. This produces a bypass, allowing the wheel 4 to rotate with respect to the flap 5, staying in its same position. Said bypass leads the maneuvering pin 53 to move from the first recess 41 to the middle recess 42. Then, the actuator 3 is extended, the wheel 4 is rotated to the left, and the flap 5 is in the open position 52. This corresponds to the nominal configuration of figure 3. The nominal mode is fully restored. The next operation of the actuator 3, to retract it, turns the wheel 4 to the right and moves the flap 5 to the close position 51.

This is another use of the bypass. The bypass allows the flap 5 to move with respect to the wheel 4 in manual/emergency mode. And, the bypass allows the wheel 4 to rotate with respect to the flap 5 when the mechanism 1 reverts to nominal mode.

Let us now revert to the first driving means.

According to another feature, as illustrated in figures 1-6, for both embodiments of the bypass, the actuator 3 is translating. The translating direction of said actuator 3 is disposed generally perpendicular to axis A and not passing through axis A, so as to be generally tangent to the wheel 4. The actuator 3 has an end 31 fixed to the fixed body 2, in order to provide reference. The first driving means comprises a slot 46 cut in the wheel 4. This slot is generally radial, with respect to axis A. Said slot 46 is able to receive the other end 32 of the actuator 3 and to cooperate with it. Accordingly, the actuator 3 can reciprocally rotationally drive the wheel 4 when the actuator 3 is correspondingly reciprocally operated.

When the actuator 3 is retracted, as illustrated in figures 1, 2, 5, 6, the wheel 4 is rotated to the right. When the actuator 3 is extended, as illustrated in figures 3, 4, the wheel 4 is rotated to the left. An extension of the actuator 3 rotates the wheels counterclockwise. A retraction of the actuator 3 rotates the wheels clockwise.

According to another alternate feature, not illustrated, the actuator 3 is rotating. It can then drive the wheel 4, either directly, or through a transmitting means.

According to another feature the mechanism is designed to apply a light pressure on the flap 5 when said flap 5 is in the closed position 51. This advantageously avoids a rattling of the flap 5.

This is obtained by slightly shifting the angular position of the wheel 4 toward the closure, in the close position 51. This can be done by trimming either the first driving means (length of the actuator 3 of slope of the slot 46) or the second driving means (angular position of the recesses 41, 42, 43 or of the teeth of the shaft 54).

According to another advantageous feature, the flap 5 closes against a deformable seal 7 surrounding the aperture closed by the flap 5. Said seal 7 betters the sealing of the flap 5. Additionally, its deformability, preferentially elastic, also betters the anti-rattling feature.

The invention also concerns a connector 8. Said connector 8 comprises such a mechanism 1. The flap 5 is used, to selectively protect, at least some of the terminals 81, 82 of said connector 8. When the flap 5 is in the closed position 51, it forbids access to the protected terminals 81, 82 and protects them from dust and connection. When the flap 5 is in the open position 52, it frees access to said protected terminals 81, 82.

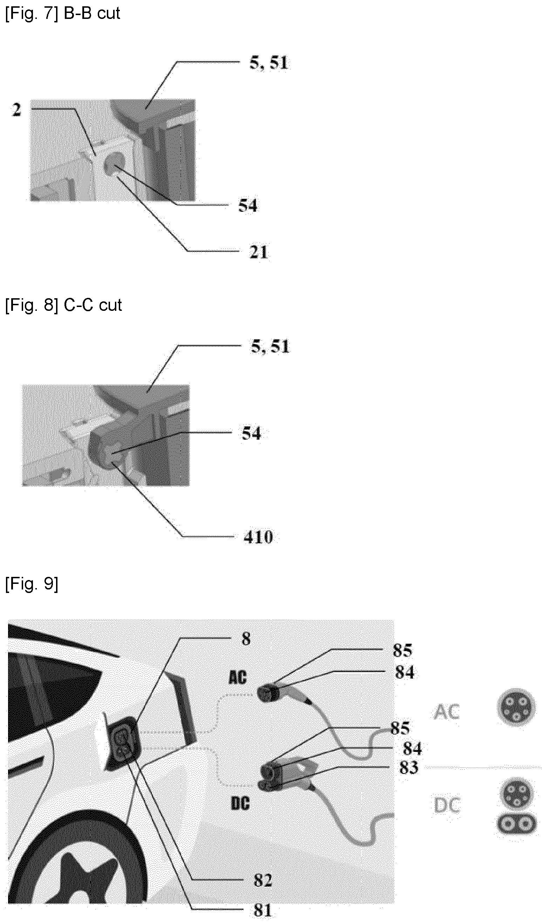

According to another feature, illustrated in figure 9, an application of said connector 8 can be to charge an electric car. The connector 8 is then advantageously disposed on car side. A charging connector 8, on car side, typically comprises DC terminals 81 and AC terminals 82. A counter connector 85, on charger side, comprises either only AC counter terminals 84 or AC counter terminals 84 combined with DC counter terminals 83.

It is useful to provide a flap 5 selectively protecting the DC terminals 81, the flap 5 being closed when DC connectors 81 are not used. Access to the AC terminals 82 is permanent, since they are always used during a charge.

While there is shown and described the present preferred embodiment of the invention, it is to be distinctly understood that this invention is not limited thereto but may be variously embodied to practice within the scope of the following claims.

### Reference sign list

1: mechanism,
2: fixed body,
21: round bore,
3: actuator,
31: fixed end,
32: mobile end,
4: wheel,
41, 42, 43: recess,
44, 45: path,
46: radial slot,
47: circular cam,
48, 48', 49, 49': elongated hole,
410: bore,
411: hole,
412: central bore,
5: flap,
51: closed position,
52: open position,
53: maneuvering pin,
54: shaft,
7: seal,
8: connector,
81: DC terminal,
82: AC terminal,
83: DC counter terminal,
84: AC counter terminal,
85: counter connector,
A: axis.

## Claims

1. A mechanism (1) comprising a fixed body (2), an actuator (3), a wheel (4) and a flap (5), a first driving means through which the actuator (3) reciprocally rotationally drives the wheel (4) and a second driving means through which the wheel (4) consequently reciprocally drives the flap (5), between at least a closed position (51) and an open position (52), ***characterized in that*** it further comprises a bypass forcefully releasable to disconnect the second driving means so as to allow a movement of the flap (5) with respect to the wheel (4), between any of the positions (51, 52).

2. The mechanism (1) of claim 1, wherein the wheel (4) is rotationally fixed to the fixed body (2) around an axis (A), the flap (5) is rotationally fixed to the fixed body (2), around the same axis (A), the second driving means comprises a maneuvering pin (53), part of the flap (5), generally parallel to axis (A), cooperating with at least one recess (41, 42, 43), part of the wheel (4), able to firmly welcome the maneuvering pin (53) so as to reciprocally transmit the rotation of the wheel (4) to the maneuvering pin (53) and thus reciprocally move the flap (5) when the wheel (4) rotates.

3. The mechanism (1) of claim 2, wherein the bypass comprises a path (44, 45) between any two adjacent recesses (41, 42, 43), part of the wheel (4), wherein said path (44, 45) remains blocked to forbid a movement of the maneuvering pin (53) with respect to the wheel (4), when a relative force between the flap (5) and the wheel (4) remains lesser than a threshold and being forcefully and reversibly deformed, so as to be loosened and to allow a movement of the maneuvering pin (53) with respect to the wheel (4), from one recess (41, 42, 43) to an adjacent other, when the relative force is greater than the threshold, without rotating the wheel (4).

4. The mechanism (1) of any one of claims 1 to 3, wherein recesses (41, 42, 43) are circularly located around axis (A), wherein paths (44, 45) are circularly shaped around axis (A), from one recess (41, 42, 43) to an adjacent one, and together form a circular cam (47) centered around axis (A).

5. The mechanism (1) of claim 4, wherein the circular cam (47) is located on the outer periphery of the wheel (4) and is single sided.

6. The mechanism (1) of claim 4, wherein the circular cam (47) is not located on the outer periphery of the wheel (4) and is double sided.

7. The mechanism (1) of any one of claims 3 to 6, wherein the forceful reversible deformation of a path (44, 45) is mainly obtained from matter, preferentially polyurethan.

8. The mechanism (1) of any one of claims 3 to 6, wherein the forceful reversible deformation of a path (44, 45) is mainly obtained from shape, the wheel (4) further comprising at least one elongated hole (48, 48', 49, 49'), generally internally following a path (44, 45), to allow its deformation and wherein the wheel (4) is preferentially made of plastic.

9. The mechanism (1) of claim 1, wherein the second driving means comprises a rotational coupling comprising a non-circular shaped shaft (54), part of flap (5), respectively of the wheel (4), and a correspondingly non-circular shaped bore (410), part of the wheel (4), respectively of the flap (5), wherein at least one among the shaft (54) and/or the bore (410) is forcefully deformable so as to provide a bypass, allowing the shaft (54) and the bore (410) to rotate with respect to one another.

10. The mechanism (1) of claim 9, wherein the common non-circular shape is rotationally symmetrical, preferentially regularly toothed, so as to reproduce itself when rotating and thus indexing the rotation, the distance between two indexes defining the distance between any two positions (51, 52).

11. The mechanism (1) of any one of claims 1 to 10, wherein the actuator (3) is translating, disposed generally perpendicular to axis (A) and not passing through axis (A), having an end (31) fixed to the fixed body (2), wherein the first driving means comprises a generally radial slot (46), with respect to axis (A), cut in the wheel (4), able to receive the other end (32) of the actuator (3) and to cooperate with it to reciprocally rotationally drive the wheel (4) when the actuator (3) is reciprocally operated.

12. The mechanism (1) of any one of claims 1 to 10, wherein the actuator (3) is rotating.

13. The mechanism (1) of any one of claims 1 to 12, designed to apply a light pressure on the flap (5) when in the closed position (51), in order to avoid rattling of the flap (5).

14. A connector (8) ***characterized in that*** it comprises a mechanism (1) according to any one of the preceding claims, the flap (5) being used, to selectively protect, at least some of the terminals (81, 82) of said connector (8).

15. The connector (8) of the preceding claim, used to charge an electric car, disposed on the car side, comprising DC terminals (81) and AC terminals (82), wherein the flap (5) selectively protects the DC terminals (81).
